# FASCICULE DE BREVET EUROPEEN

(11) **EP 4 117 991 B1**
(45) Date de publication et mention de la délivrance du brevet: **13.11.2024**
(21) Numéro de dépôt: 21716489.6
(22) Date de dépôt: 09.03.2021
(51) Int. Cl.: B63C 9/01, B64D 1/22, B64U 101/00, B64U 101/55, B64U 101/60

(54) **SYSTÈME DE LARGAGE ET DE RÉCUPÉRATION D'UN OBJET EN UN POINT D'UNE ÉTENDUE D'EAU, PROCÉDÉ DE LARGAGE ET PROCÉDÉ DE RÉCUPÉRATION D'UN OBJET**
SYSTEM ZUM FREILASSEN UND EINSAMMELN EINES OBJEKTES AN EINER STELLE INS WASSER, VERFAHREN ZUM FREILASSEN UND VERFAHREN ZUM EINSAMMELN EINES OBJEKTES
SYSTEM FOR DISCHARGING AND COLLECTING AN OBJECT AT A POINT IN WATER, METHOD FOR DISCHARGING AND METHOD FOR COLLECTING AN OBJECT

(30) Priorité: 10.03.2020 FR 2002346
(43) Date de publication de la demande: 18.01.2023
(73) Titulaire: Centre national de la recherche scientifique, 75016 Paris (FR); D-Ice Engineering, 44300 Nantes (FR)
(72) Inventeur: KERKENI, Sofien, 44000 NANTES (FR); RONGERE, François, 44300 NANTES (FR); PENIN, Bryan, 44100 NANTES (FR); CARO, Stéphane, 44300 NANTES (FR)
(74) Mandataire: Novagraaf Technologies
(86) Numéro de dépôt international: PCT/FR2021/050400
(87) Numéro de publication internationale: WO 2021/181042

(56) Documents cités:
- CN-A- 103 921 910
- CN-A- 109 649 604
- GB-A- 1 095 362
- US-A- 3 421 165
- US-A1- 2012 145 064
- US-A1- 2018 194 445
- US-A1- 2020 031 438
- US-B1- 10 155 587

## Description

### Domaine technique de l'invention

La présente invention concerne le domaine du largage et de la récupération d'objets ou d'engins en mer ou plus généralement au sein d'une grande étendue d'eau.

Le principal domaine d'application visé concerne le largage et la récupération d'engins d'opération marine connus sous l'acronyme « ROV » pour « Remotely Operated undennrater Vehicle » ou « UUV » pour « Unmanned Underwater Vehicle » en terminologie anglaise. L'enjeu du largage d'un tel engin est de transporter l'engin depuis une plateforme et de le déposer à la surface de l'eau sans endommager l'engin ni la plateforme. L'enjeu de la récupération de l'engin est de le remonter sur la plateforme une fois sa mission terminée sans endommager l'engin ni la plateforme. La plateforme est par exemple le pont d'un bateau.

A titre illustratif, les engins « ROV » ou « UUV » peuvent être configurés pour effectuer les missions suivantes :
- inspection et maintenance de structures sous-marines,
- assistance au nettoyage de nappes de pétrole
- assistance à des opérations de sauvetage
- opérations de surveillance par exemple bathymétrie

L'invention concerne plus particulièrement un système de largage et de récupération d'un objet en un point d'une étendue d'eau ainsi qu'un procédé de largage et un procédé de récupération d'un objet au moyen d'un tel système.

### Arrière-plan technique

Les systèmes de largage et de récupération d'engins en mer connus mettent en oeuvre des mécanismes de levage utilisant des câbles. En effet, les engins d'opération marine sont traditionnellement largués et récupérés au moyen de bossoirs, de rampes ou de nacelles flottantes.

Les bossoirs sont des dispositifs de levage utilisés à bord de bateaux et comportant une potence, un système de poulies et un câble engagé sur les poulies afin de hisser ou larguer une ancre, une annexe ou un engin d'opération marine.

Les rampes font partie intégrante du navire et sont généralement placées à la poupe. Ces dernières comportent une surface de guidage munie par exemple de roulements, un système de poulies et un câble engagé sur les poulies afin de hisser ou de larguer un engin d'opération marine.

Les nacelles sont des structures reliées à un navire par un câble et comportant un emplacement destiné à recevoir un engin d'opération marine. Les nacelles sont treuillées à la surface de l'eau pour réceptionner ou larguer un engin. La nacelle présente l'avantage de rester à la surface de l'eau en accompagnant les mouvements de la houle.

Les systèmes de largage et de récupération d'engins en mer mentionnés ci-dessus présentent de nombreux inconvénients. Premièrement, ces systèmes sont encombrants. En effet, en raison de leur manque d'adaptabilité face à des charges utiles et à des volumes variés, ces systèmes sont dimensionnés en fonction du volume et du poids maximal des engins à récupérer. En outre, ces systèmes sont fixés au bateau, ce qui ne permet pas de libérer l'espace occupé par les systèmes une fois le largage ou la réception effectuée.

Deuxièmement, ces systèmes sont coûteux en main d'oeuvre. Les opérations nécessitent l'intervention d'une dizaine de membres d'équipage sur une durée effective pouvant atteindre 30 minutes. Une majorité des opérations sont effectuées manuellement ou par le biais de perches. En outre, ces méthodes de récupération nécessitent un positionnement précis à la fois du bateau et de l'engin en mer, ce qui nécessite un contrôle du bateau et de l'engin par plusieurs membres d'équipage.

Troisièmement, ces systèmes sont fortement affectés par l'état de mer. Il est généralement nécessaire de réduire très fortement la vitesse du navire faisant partie du système, voire de mettre le navire à l'arrêt, pour une opération de récupération afin de faciliter l'opération et réduire les risques. Ceci a pour conséquence de rendre le système vulnérable dans le cadre de théâtres d'opérations militaires. En effet, le contact et le guidage entre le système et l'engin doivent être bien maîtrisés pour éviter toute détérioration matérielle liée aux chocs entre le système et l'engin. Dans le cas des bossoirs et des rampes, le système et l'engin subissent des déplacements à des fréquences et des amplitudes différentes, ce qui rend la récupération de l'engin très délicate à partir d'un état de mer 3. Les nacelles flottantes compensent le roulis, le tangage et le lacet dans une certaine mesure ce qui facilite la récupération et la rend possible en état de mer 5. Cependant pour tous les systèmes, les engins sont fortement affectés par la houle en surface ce qui compromet la récupération de l'engin. En effet, en raison de la taille relativement faible des engins, ces derniers présentent une puissance et une manoeuvrabilité limitée en particulier lors des opérations de récupération.

Enfin, les systèmes existants sont risqués. En effet, ces manoeuvres se situent proche du bord du navire ce qui augmente le risque humain. En outre, lors des opérations de largage et de récupération, des chocs importants entre le système et l'engin dus aux larges amplitudes de mouvement peuvent endommager l'engin et ses capteurs. Le document US2020031438 concerne un drone de recherche et de sauvetage, qui comprend un élément de corps flottant, un cadre fixé à l'élément de corps flottant permettant de porter au moins un moteur et une hélice, et un ensemble électronique comprenant une caméra, un GPS, une balise radio d'indication de position en cas d'urgence, ainsi qu'un émetteur et un récepteur permettant de piloter manuellement le drone et de communiquer avec un opérateur. Les documents CN109649604, US2018/194445, US3421165 GB1095362, US2012/145064 et US10155587 donnent des exemples de systèmes de récupération en mer ou de drones.

### Résumé de l'invention

L'invention propose un système de largage et de récupération d'un objet en un point d'une étendue d'eau, comportant :
- au moins un filet,
- au moins un drone volant configuré pour être autonome ou pilotable et relié au filet en au moins un point d'accroche disposé le long de la périphérie du filet pour permettre le déploiement dudit au moins un filet.

Le ou les filets sont lestés de manière à être immergés dans l'eau. Selon d'autres caractéristiques de l'invention :
- le ou les filets sont souples,
- le système comporte au moins trois drones volants configurés pour être pilotés de manière synchronisée,
- le filet est de forme polygonale et en ce que chacun des au moins trois drones volants est relié à un angle du filet de forme polygonale

L'invention concerne également un procédé de largage d'un objet en un point de largage d'une étendue d'eau depuis une plateforme mis en oeuvre au moyen d'un système selon l'invention, le procédé comportant les étapes suivantes :
- disposition du ou des filets et du ou des drones volants reliés aux filets sur la plateforme de manière que le ou les filets soient déployés,
- positionnement de l'objet sur le ou les filets,
- pilotage du ou des drones volants pour qu'ils transportent l'objet par l'intermédiaire du ou des filets depuis la plateforme jusqu'au point de largage,
- pilotage du ou des drones volants pour immerger le ou les filets dans l'eau,
- largage de l'objet au point de largage.

Selon une réalisation particulière de l'invention, le procédé de largage est entièrement automatisé et peut utiliser des informations fournies par des capteurs. Selon une réalisation particulière de l'invention, l'étape de largage de l'objet au point de largage est réalisée par pilotage du ou des drones volants pour qu'il dégage le ou les filets de l'objet.

Selon une réalisation particulière de l'invention, l'objet comporte des actionneurs et l'étape de largage de l'objet au point de largage est réalisée par la mise en oeuvre des actionneurs de l'objet pour que l'objet se dégage du ou des filets.

L'invention concerne également un procédé de récupération d'un objet en un point de récupération d'une étendue d'eau mis en oeuvre au moyen d'un système selon l'invention, le procédé comportant les étapes suivantes :
- pilotage du ou des drones volants pour immerger le ou les filets dans l'eau,
- positionnement de l'objet sur le ou les filets à proximité du centre du ou des filets,
- pilotage du ou des drones volants pour qu'ils transportent l'objet par l'intermédiaire du ou des filets depuis le point de récupération jusqu'à une plateforme,
- pilotage du ou des drones volants pour poser le ou les filets et l'objet positionné dans le ou les filets sur la plateforme,
- récupération de l'objet dans le ou les filets.

Selon une réalisation particulière de l'invention, l'étape de positionnement de l'objet sur le ou les filets est réalisée par pilotage du ou des drones volants pour qu'il positionne le ou les filets sous l'objet.

Selon une réalisation particulière de l'invention, l'objet comporte des actionneurs et l'étape de positionnement de l'objet sur le ou les filets est réalisée par la mise en oeuvre des actionneurs de l'objet pour que l'objet se positionne sur le filet.

Selon une réalisation particulière de l'invention, l'objet est positionné au centre ou à proximité du centre du ou des filets.

### Brève description des figures

D'autres caractéristiques et avantages de l'invention apparaîtront au cours de la lecture de la description détaillée qui va suivre pour la compréhension de laquelle on se reportera aux dessins annexés dans lesquels :
[Fig.1] - la figure 1 est une représentation schématique d'un système de largage et de récupération selon un mode de réalisation de l'invention ;
[Fig.2] - la figure 2 est un organigramme des étapes d'un procédé de largage selon l'invention ;
[Fig.3] - la figure 3 est un organigramme des étapes d'un procédé de récupération selon l'invention.

### Description détaillée de l'invention

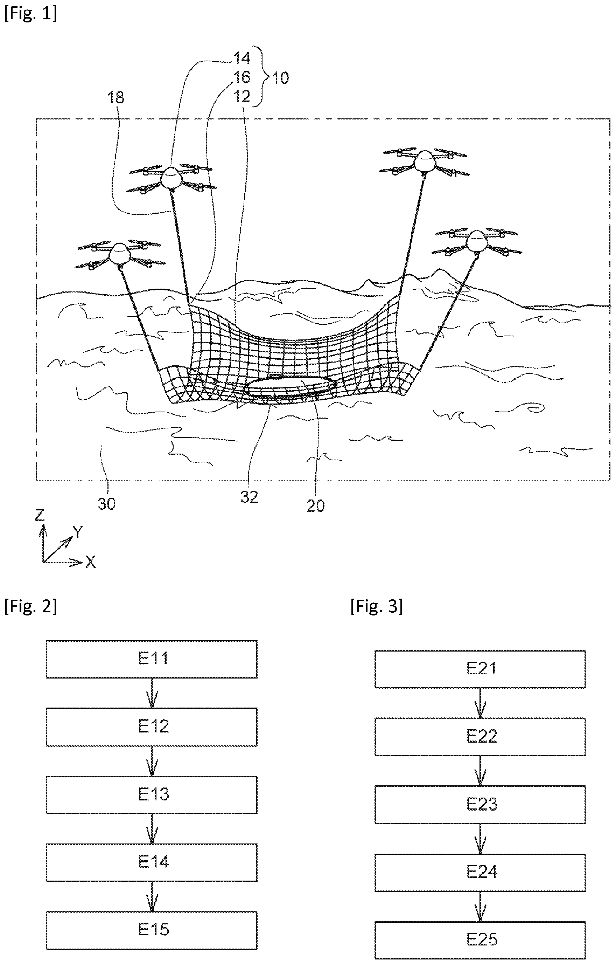

Pour la description de l'invention et la compréhension des revendications, on adoptera à titre non limitatif les orientations longitudinale, transversale et verticale, selon le repère orthogonal direct X, Y, Z indiqué à la figure 1 dont les axes longitudinal X et transversal Y s'étendent dans un plan horizontal.

L'axe vertical est aligné avec le champ de la gravité terrestre. Par convention, l'axe est orienté du bas vers le haut.

Dans la description qui va suivre, les termes relatifs au positionnement comme « sur » sont à interprétés en référence au repère X, Y, Z.

A la figure 1 est représenté un système 10 de largage et de récupération d'un objet 20 en un point 32 d'une étendue d'eau 30 selon l'invention. Le système 10 de largage et de récupération est mis en oeuvre depuis le sol ou une plateforme telle que le pont d'un bateau.

Dans l'exemple représenté, le système 10 de largage et de récupération comporte un filet 12 et quatre drones volants 14.

On entend par « filet » un maillage de cordage. A titre illustratif et nullement limitatif, le cordage comporte des matières végétales comme le chanvre, des matières métalliques comme l'acier ou des matières synthétiques comme le nylon.

Le filet 12 est souple, c'est-à-dire qu'il est apte à se déformer sous l'action de son propre poids. En particulier, le filet ne comporte pas de cadre rigide, ni de maille rigide. Ceci permet d'éviter toute détérioration de l'objet 20 lors d'un contact entre le filet 12 et l'objet 20.

Le filet 12 est robuste et la multiplicité des câbles permet d'augmenter la capacité de charge, la manipulabilité ainsi que de limiter les risques de chute de l'engin ou de l'objet en cas de rupture d'un ou de plusieurs câbles.

Le filet 12 est lesté de manière à être immergé dans l'eau, c'est-à-dire qu'il coule une fois plongé dans l'étendue d'eau. Selon une réalisation particulière, le filet 12 est lesté par des poids répartis sur sa surface. Selon une autre réalisation, le filet 12 comporte des brins de son cordage qui sont lestés.

Chaque drone volant 14 est configuré pour être autonome ou pilotable. Le drone volant 14 comporte par exemple quatre hélices reliées chacune à un moteur indépendant. Chaque moteur reçoit une commande d'une unité de commande. L'unité de commande comporte un module de communication à distance permettant un échange d'informations entre l'unité de commande et une unité de contrôle distante.

Chacun des drones peut comporter un radar, une caméra ou tout autre système de détection permettant de repérer l'objet 20. De plus le filet, les drones et/ou l'objet peuvent être localisés par un ou des dispositifs de localisation relatifs ou absolus.

Chaque drone volant 14 est relié au filet 12 en un ou plusieurs points d'accroche 16. Chaque drone volant 14 peut être relié au filet 12 par un câble 18. Le câble 18 est par exemple constitué dans le même cordage que les mailles du filet 12. A titre illustratif et nullement limitatif, le câble 18 peut comporter des matières végétales comme le chanvre, des matières métalliques comme l'acier ou des matières synthétiques comme le nylon.

Dans l'exemple, le filet 12 est de forme rectangulaire et plus particulièrement de forme sensiblement carrée. Les quatre drones volants 14 sont reliés chacun à un coin du filet 12 rectangulaire.

Les points d'accroche 16 sont répartis en règle générale le long de la périphérie du filet 12 pour permettre le déploiement du filet 12. Par exemple, si le filet 12 est circulaire, le système 10 de largage et de récupération comporte au moins trois drones volants reliés à des points d'accroche 16 répartis régulièrement le long du périmètre circulaire du filet 12.

En variante, si le filet 12 est polygonal, le système 10 de largage et de récupération comporte autant de drones volants que de sommets comportés par le polygone formant le filet 12 et chacun des drones est relié à un sommet du polygone.

Plus généralement, le filet peut avoir une forme quelconque et un nombre de points d'accroche arbitraire.

Un système 10 de largage et de récupération comportant au moins trois drones volants 14 configurés pour être pilotés de manière synchronisée permet de déployer le filet 12 simplement en contrôlant l'espacement des drones volants 14.

En variante, le système 10 de largage et de récupération comporte un seul drone volant 14 qui comporte un cadre rigide présentant des dimensions extérieures comparables ou supérieures aux dimensions du filet 20. Le cadre rigide comporte des points de fixation reliés aux points d'accroche 16 du filet 12 par des câbles. Par exemple, les points d'accroche 16 sont des projections des points de fixation du cadre selon une même projection. En particulier, les câbles reliant les points de fixation aux points d'accroche 16 ne se croisent pas pour permettre le déploiement du filet 12.

L'utilisation de drones volants 14 permet d'obtenir un système 10 de largage et de récupération réactif, rapide et aisément déplaçable dans l'espace.

Il est fait maintenant référence à la figure 2 pour décrire un procédé de mise en oeuvre du système 10 de largage et de récupération. Le procédé de la figure 2 est un procédé de largage d'un objet 20 en un point de largage d'une étendue d'eau 30 depuis une plateforme.

Le procédé de largage comporte les étapes suivantes :
- disposition E11 du filet 12 et du drone volant 14 relié au filet 12 sur la plateforme de manière que le filet 12 est déployé,
- positionnement E12 de l'objet 20 sur le filet 12 à proximité du centre du filet 12,
- pilotage E13 du drone volant 14 pour qu'il transporte l'objet 20 par l'intermédiaire du filet 12 depuis la plateforme jusqu'au point de largage,
- pilotage E14 du drone volant 14 pour immerger le filet 12 dans l'eau,
- largage E15 de l'objet 20 au point de largage.

L'étape de largage E15 de l'objet 20 au point de largage peut être réalisée par pilotage du drone volant 14 pour qu'il dégage le filet 12 de l'objet 20.

En variante, lorsque l'objet 20 comporte des actionneurs, l'étape de largage E15 de l'objet 20 au point de largage peut être réalisée par la mise en oeuvre des actionneurs de l'objet 20 pour que l'objet 20 se dégage du filet 12.

A présent, il est fait référence à la figure 3 pour décrire un autre procédé de mise en oeuvre du système 10 de largage et de récupération. Le procédé de la figure 3 est un procédé de récupération d'un objet en un point de récupération d'une étendue d'eau 30.

Le procédé de récupération comporte les étapes suivantes :
- pilotage E21 du drone volant 14 pour immerger le filet 12 dans l'eau,
- positionnement E22 de l'objet 20 sur le filet 12 à proximité du centre du filet 12,
- pilotage E23 du drone volant 14 pour qu'il transporte l'objet 20 par l'intermédiaire du filet 12 depuis le point de récupération jusqu'à une plateforme,
- pilotage E24 du drone volant 14 pour poser le filet 12 et l'objet 20 positionné dans le filet 12 sur la plateforme,
- récupération E25 de l'objet 20 dans le filet 12.

L'étape de positionnement E22 de l'objet 20 sur le filet 12 à proximité du centre du filet 12 peut être réalisée par pilotage du drone volant 14 pour qu'il positionne le filet 12 sous l'objet 20.

En variante, lorsque l'objet 20 comporte des actionneurs, l'étape de positionnement de l'objet 20 sur le filet 12 à proximité du centre du filet 12 peut être réalisée par la mise en oeuvre des actionneurs de l'objet pour que l'objet 20 se positionne sur le filet 12.

L'invention présente de nombreux avantages. Premièrement, le système 10 de largage et de récupération est peu encombrant par rapport aux systèmes de l'art antérieur. Il peut être adapté aisément à différents volumes d'engins à larguer ou à récupérer tout en présentant un volume de stockage limité. En outre, le système peut être débarqué du bateau ou de la plateforme car il n'est pas fixé à bord.

Deuxièmement, le système 10 de largage et de récupération permet de limiter les coûts en main d'oeuvre et en maintenance par rapport aux systèmes de l'art antérieur car il ne nécessite pas de force physique et peu de manoeuvre.

Troisièmement, le système 10 de largage et de récupération permet une récupération d'engins ou d'objets par haut état de mer, en particulier par un état de mer 5, et il est indépendant de la vitesse de croisière du système.

Ensuite, le système 10 de largage et de récupération permet de limiter les risques. Le système permet de limiter le risque humain en permettant un contrôle du système 10 à distance. Le système permet de limiter le risque d'endommager l'engin ou l'objet grâce à un contact "mou" entre l'engin ou l'objet et le filet. En outre, le risque de collision avec la coque du bateau est réduit.

De plus, le système 10 de largage et de récupération est plus simple à mettre en oeuvre que les systèmes de l'art antérieur. Il peut être déployé simplement sur un bateau ou une plateforme car il ne nécessite pas de modification du bateau ou de la plateforme. Enfin, le système 10 de largage et de récupération est plus performant que les systèmes de l'art antérieur. Il permet une mise en oeuvre en tout point de largage ou de récupération avec une grande précision. En particulier, le largage et la récupération ne sont pas limités aux environs du bateau et peuvent être réalisés dans un rayon de plusieurs centaines de mètres.

Le largage et la récupération d'un engin ou d'un objet sont facilités et accélérés grâce à une approche et un positionnement directs du système par rapport au point de largage ou de récupération. Il n'est pas nécessaire de repositionner le bateau au préalable d'une opération de largage ou de récupération.

Le système 10 permet une récupération de l'engin ou de l'objet sans solliciter les actionneurs de ce dernier par exemple en cas de panne ou de dysfonctionnement de l'engin ou de l'objet.

On comprendra que diverses modifications et/ou améliorations évidentes pour l'homme du métier peuvent être apportées aux différents modes de réalisation de l'invention décrits ou évoqués dans la présente description sans sortir du cadre de l'invention. En particulier, il est possible de combiner les différents modes de réalisation entre eux, dans la mesure où ils entrent dans le champ d'application des revendications annexées.

## Revendications

1. Système (10) de largage et de récupération d'un objet (20) en un point (32) d'une étendue d'eau (30) comportant :
au moins un filet (12),
au moins un drone volant (14) configuré pour être autonome ou pilotable et
relié au filet (12) en au moins un point d'accroche (16) disposé le long de la
périphérie du filet (12) pour permettre le déploiement dudit au moins un filet (12) ;
**caractérisé en ce que** le ou les filets (12) sont lestés de manière à être immergés dans l'eau.

2. Système (10) de largage et de récupération d'un objet (20) selon la revendication 1, **caractérisé en ce que** le ou les filets (12) sont souples.

3. Système (10) de largage et de récupération d'un objet (20) selon l'une quelconque des revendications précédentes, **caractérisé en ce qu'**il comporte au moins trois drones volants (14) configurés pour être pilotés de manière synchronisée.

4. Système (10) de largage et de récupération d'un objet (20) selon la revendication 3, **caractérisé en ce que** le filet (12) est de forme polygonale et **en ce que** chacun des au moins trois drones volants (14) est relié à un angle du filet (12) de forme polygonale.

5. Procédé de largage d'un objet (20) en un point de largage d'une étendue d'eau (30) depuis une plateforme, **caractérisé en ce que** le procédé de largage est mis en oeuvre au moyen d'un système (10) de largage et de récupération d'un objet (20) selon l'une quelconque des revendications 1 à 4, et **en ce qu'**il comporte les étapes suivantes :
- E11 : disposition du ou des filets (12) et du ou des drones volants (14) reliés aux filets (12) sur la plateforme de manière que le ou les filets (12) soient déployés,
- E12 : positionnement de l'objet (20) sur le ou les filets (12),
- E13 : pilotage du ou des drones volants (14) pour qu'ils transportent l'objet (20) par l'intermédiaire du ou des filets (12) depuis la plateforme jusqu'au point de largage,
- E14 : pilotage du ou des drones volants (14) pour immerger le ou les filets (12) dans l'eau,
- E15 : largage de l'objet (20) au point de largage.

6. Procédé de largage selon la revendication 5, **caractérisé en ce qu'**il est entièrement automatisé et peut utiliser des informations fournies par des capteurs.

7. Procédé de largage selon la revendication 5 ou 6, **caractérisé en ce que** l'étape de largage (E15) de l'objet (20) au point de largage est réalisée par pilotage du ou des drones volants (14) pour qu'ils dégagent le ou les filets (12) de l'objet (20).

8. Procédé de largage selon l'une quelconque des revendications 5 à 7, **caractérisé en ce que** l'objet (20) comporte des actionneurs et **en ce que** l'étape de largage (E15) de l'objet (20) au point de largage est réalisée par la mise en oeuvre des actionneurs de l'objet (20) pour que l'objet (20) se dégage du ou des filets (12).

9. Procédé de récupération d'un objet en un point de récupération d'une étendue d'eau (30), **caractérisé en ce que** le procédé de récupération est mis en oeuvre au moyen d'un système (10) de largage et de récupération d'un objet (20) selon l'une quelconque des revendications 1 à 4, et **en ce qu'**il comporte les étapes suivantes :
- E21 : pilotage du ou des drones volants (14) pour immerger le ou les filets (12) dans l'eau,
- E22 : positionnement de l'objet (20) sur le ou les filets (12),
- E23 : pilotage du ou des drones volants (14) pour qu'ils transportent l'objet (20) par l'intermédiaire du ou des filets (12) depuis le point de récupération jusqu'à une plateforme,
- E24 : pilotage du ou des drones volants (14) pour poser le ou les filets (12) et l'objet (20) positionné dans le ou les filets (12) sur la plateforme,
- E25 : récupération de l'objet (20) dans le ou les filets (12).

10. Procédé de récupération selon la revendication 9, **caractérisé en ce que** l'étape de positionnement (E22) de l'objet (20) sur le ou les filets (12) est réalisée par pilotage du ou des drones volants (14) pour qu'ils positionnent le ou les filets (12) sous l'objet (20).

11. Procédé de récupération selon l'une quelconque des revendications 9 ou 10, **caractérisé en ce que** l'objet (20) comporte des actionneurs et **en ce que** l'étape de positionnement de l'objet (20) sur le ou les filets (12) est réalisée par la mise en oeuvre des actionneurs de l'objet pour que l'objet (20) se positionne sur le ou les filets (12).

12. Procédé de récupération selon la revendication 10 ou 11, **caractérisé en ce que** l'objet (20) est positionné au centre ou à proximité du centre du ou des filets (12).

## Patentansprüche

1. System (10) zum Abwerfen und Bergen eines Objekts (20) an einem Punkt (32) eines Gewässers (30), umfassend:
mindestens ein Netz (12),
mindestens eine fliegende Drohne (14), die konfiguriert ist, um autonom oder steuerbar zu sein, und an mindestens einem Befestigungspunkt (16), der entlang der Peripherie des Netzes (12) angeordnet ist, mit dem Netz (12) zum Ermöglichen des Ausbreitens des mindestens einen Netzes (12) verbunden ist;
**dadurch gekennzeichnet, dass** das oder die Netze (12) so beschwert sind, dass sie in das Wasser eingetaucht sind.

2. System (10) zum Abwerfen und Bergen eines Objekts (20) nach Anspruch 1, **dadurch gekennzeichnet, dass** das oder die Netze (12) flexibel sind.

3. System (10) zum Abwerfen und Bergen eines Objekts (20) nach einem der vorstehenden Ansprüche, **dadurch gekennzeichnet, dass** es mindestens drei fliegende Drohnen (14) umfasst, die konfiguriert sind, um synchronisiert gesteuert zu werden.

4. System (10) zum Abwerfen und Bergen eines Objekts (20) nach Anspruch 3, **dadurch gekennzeichnet, dass** das Netz (12) eine vieleckige Form vorweist und **dass** jede der mindestens drei fliegenden Drohnen (14) mit einer Ecke des vieleckigen Netzes (12) verbunden ist.

5. Verfahren zum Abwerfen eines Objekts (20) an einem Abwurfpunkt eines Gewässers (30) von einer Plattform, **dadurch gekennzeichnet, dass** das Abwurfverfahren mittels eines Systems (10) zum Abwerfen und Bergen eines Objekts (20) nach einem der Ansprüche 1 bis 4 implementiert wird, und **dass** es die folgenden Schritte umfasst:
- E11: Anordnen des oder der Netze (12) und der fliegenden Drohne(n) (14), die mit den Netzen (12) verbunden sind, auf der Plattform, so dass das oder die Netze (12) ausgebreitet werden,
- E12: Positionieren des Objekts (20) auf dem oder den Netzen (12),
- E13: Steuern der fliegende Drohne(n) (14), damit sie das Objekt (20) über das oder die Netze (12) von der Plattform bis zu dem Abwurfpunkt transportieren,
- E14: Steuern der fliegende Drohne(n) (14) zum Eintauchen des oder der Netze (12) in das Wasser,
- E15: Abwerfen des Objekts (20) an dem Abwurfpunkt.

6. Abwurfverfahren nach Anspruch 5, **dadurch gekennzeichnet, dass** es vollautomatisch ist und Informationen nutzen kann, die durch Sensoren bereitgestellt werden.

7. Abwurfverfahren nach Anspruch 5 oder 6,
**dadurch gekennzeichnet, dass** der Schritt des Abwerfens (E15) des Objekts (20) an dem Abwurfpunkt durch Steuern der fliegenden Drohne(n) (14) erfolgt, damit sie das oder die Netze (12) von dem Objekt (20) lösen.

8. Abwurfverfahren nach einem der Ansprüche 5 bis 7,
**dadurch gekennzeichnet, dass** das Objekt (20) Aktuatoren umfasst, und **dass** der Schritt des Abwerfens (E15) des Objekts (20) an dem Abwurfpunkt durch das Implementieren der Aktuatoren des Objekts (20) erfolgt, damit sich das Objekt (20) von dem oder den Netzen (12) löst.

9. Verfahren zum Bergen eines Objekts an einem Bergungspunkt eines Gewässers (30), **dadurch gekennzeichnet, dass** das Bergungspunktverfahren mittels eines Systems (10) zum Abwerfen und Bergen eines Objekts (20) nach einem der Ansprüche 1 bis 4 implementiert wird, und **dass** es die folgenden Schritte umfasst:
- E21: Steuern der fliegende Drohne(n) (14) zum Eintauchen des oder der Netze (12) in das Wasser,
- E22: Positionieren des Objekts (20) auf dem oder den Netzen (12),
- E23: Steuern der fliegende Drohne(n) (14), damit sie das Objekt (20) über das oder die Netze (12) von dem Bergungspunkt bis zu einer Plattform transportieren,
- E24: Steuern der fliegende Drohne(n) (14) zum Platzieren des oder der Netze (12) und des Objekts (20), das in dem oder den Netzen (12) positioniert ist, auf der Plattform,
- E25: Bergen des Objekts (20) in dem oder den Netzen (12).

10. Bergungsverfahren nach Anspruch 9, **dadurch gekennzeichnet, dass** der Schritt des Positionierens (E22) des Objekts (20) auf dem oder den Netzen (12) durch Steuern der fliegenden Drohne(n) (14) erfolgt, damit sie das oder die Netze (12) unter dem Objekt (20) positionieren.

11. Bergungsverfahren nach einem der Ansprüche 9 oder 10,
**dadurch gekennzeichnet, dass** das Objekt (20) Aktuatoren umfasst, und **dass** der Schritt des Positionierens des Objekts (20) auf dem oder den Netzen (12) durch das Implementieren der Aktuatoren des Objekts erfolgt, damit sich das Objekt (20) auf dem oder den Netzen (12) positioniert.

12. Bergungsverfahren nach Anspruch 10 oder 11,
**dadurch gekennzeichnet, dass** das Objekt (20) in der Mitte oder nahe der Mitte des oder der Netze (12) positioniert ist.

## Claims

1. System (10) for releasing and recovering an object (20) at a point (32) on a body of water (30), comprising:
at least one net (12),
at least one flying drone (14) designed to be autonomous or controllable and connected to the net (12) at at least one attachment point (16) arranged along the periphery of the net (12) so as to allow said at least one net (12) to be deployed;
**characterized in that** the net(s) (12) are weighted so as to be immersed in water.

2. System (10) for releasing and recovering an object (20) according to claim 1, **characterized in that** the net(s) (12) are flexible.

3. System (10) for releasing and recovering an object (20) according to any of the preceding claims, **characterized in that** it comprises at least three flying drones (14) designed to be controlled in a synchronized manner.

4. System (10) for releasing and recovering an object (20) according to claim 3, **characterized in that** the net (12) is polygonal in shape and **in that** each of the at least three flying drones (14) is connected to a corner of the polygonal net (12).

5. Method for releasing an object (20) at a release point on a body of water (30) from a platform, **characterized in that** the release method is implemented by means of a system (10) for releasing and recovering an object (20) according to any of claims 1 to 4 and **in that** it comprises the following steps:
- E11: arranging the net(s) (12) and the flying drone(s) (14) connected to the nets (12) on the platform so that the net(s) (12) are deployed,
- E12: positioning the object (20) on the net(s) (12),
- E13: controlling the flying drone(s) (14) such that they transport the object (20) via the net(s) (12) from the platform to the release point,
- E14: controlling the flying drone(s) (14) in order to immerse the net(s) (12) in water,
- E15: releasing the object (20) at the release point.

6. Release method according to claim 5, **characterized in that** it is fully automated and can use information provided by sensors.

7. Release method according to claim 5 or 6, **characterized in that** the step of releasing (E15) the object (20) at the release point is carried out by controlling the flying drone(s) (14) such that they disengage the net(s) (12) from the object (20).

8. Release method according to any of claims 5 to 7, **characterized in that** the object (20) comprises actuators and **in that** the step of releasing (E15) the object (20) at the release point is carried out by implementing the actuators of the object (20) so that the object (20) disengages from the net(s) (12).

9. Method for recovering an object from a recovery point of a body of water (30), **characterized in that** the recovery method is implemented by means of a system (10) for releasing and recovering an object (20) according to any of claims 1 to 4, and **in that** it comprises the following steps:
- E21: controlling the flying drone(s) (14) in order to immerse the net(s) (12) in water,
- E22: positioning the object (20) on the net(s) (12),
- E23: controlling the flying drone(s) (14) such that they transport the object (20) via the net(s) (12) from the recovery point to a platform,
- E24: controlling the flying drone(s) (14) in order to place the net(s) (12) and the object (20) positioned in the net(s) (12) on the platform,
- E25: recovering the object (20) from the net(s) (12).

10. Recovery method according to claim 9, **characterized in that** the step of positioning (E22) the object (20) on the net(s) (12) is carried out by controlling the flying drone(s) (14) such that they position the net(s) (12) under the object (20).

11. Recovery method according to either of claims 9 or 10,
**characterized in that** the object (20) comprises actuators and **in that** the step of positioning the object (20) on the net(s) (12) is carried out by implementing the actuators of the object so that the object (20) is positioned on the net(s) (12).

12. Recovery method according to claim 10 or 11, **characterized in that** the object (20) is positioned at or near the center of the net(s) (12).
